# EUROPÄISCHE PATENTANMELDUNG

(11) **EP 1 883 118 A2**
(43) Veröffentlichungstag der Anmeldung: **30.01.2008**
(21) Anmeldenummer: 06023894.6
(22) Anmeldetag: 17.11.2006
(51) Int. Cl.: H01L 31/058

(54) **Kombination von Solarzellen zur fotovoltaischen Stromerzeugung mit Sonnenkollektoren zur Erzeugung von Wärmeenergie in einem Hybridkollektor**

(30) Priorität: 27.06.2006 DE 202006009991 U; 06.07.2006 DE 202006010460 U
(71) Anmelder: Holtkamp, Leonardus H. M., 7604 BS Almelo (NL)
(72) Erfinder: Holtkamp, Leonardus H. M., 7604 BS Almelo (NL)
(74) Vertreter: Habbel, Ludwig

(57) **Zusammenfassung**

Die Erfindung bezieht sich auf eineKombination von Solarzellen zur fotovoltaischen Stromerzeugung mit Sonnenkollektoren zur Erzeugung von Wärmeenergie in einem Hybridkollektor durch ein an der Rückseite der Solarzellen angeordnetes Absorberelement, wobei die Energie des Absorberelementes ggf. über einen Wärmetauscher einem Speicherelement aufgegeben wird.

## Beschreibung

Die Erfindung bezieht sich auf eine Kombination von Solarzellen zur voltaischen Stromerzeugung mit Sonnenkollektoren zur Erzeugung von Wärmeenergie in einem Hybridkollektor.

Hybridkollektoren sind bekannt, die aus einem fotovoltaischen Element und einem thermalen Modul bestehen, d. h. das fotovoltaische Element erzeugt über fotovoltaische Zellen Strom und das Thermalmodul erzeugt über die Kollektion der Wärme der Sonne Wärme, die über einen entsprechenden Wärmetauscher genutzt werden kann. Hierbei sind insbesondere sogenannte Luftkollektoren bekanntgeworden.

Die Ausbeute derartige Hybridanordnungen ist nicht besonders gut, wenn das Wärmemodul als Luftkollektor ausgebildet ist.

Der Erfindung liegt die Aufgabe zugrunde, eine Hybridanordnung zu schaffen, bestehend aus einem fotovoltaischen Stromerzeuger, kombiniert mit Sonnenkollektoren zur Erzeugung von Wärmeenergie, bei welchem die Energieausbeute höher als bisher ist.

Diese der Erfindung zugrundeliegende Aufgabe wird durch die Lehre des Hauptanspruches gelöst, d. h. dadurch, daß an der Rückseite der Solarzellen des fotovoltaischen Elementes ein Absorberelement angeordnet ist, das die Energie, d. h. also die erzeugte Wärme, ggf. über einen Wärmetauscher einem Speicherelement zuführt, wobei insbesondere die Wärme des Absorberelementes über ein Flüssigkeit führendes Absorberrohr einer Sammelleitung aufgegeben wird und hier beispielsweise zu einem Warmwasserboiler als Speicherelement oder dem Warmwasserboiler eines Heizungskreises als Speicherelement oder einer geothermischen Lagerung als Speicherelement zugeführt wird, wobei die geothermische Lagerung ohne Zwischenschaltung eines Wärmetauschers erfolgen kann.

Das Absorberelement besteht vorzugsweise aus einer Kupferplatte, die gemäß der Neuerung aus einer Vielzahl von einzelnen Plattenelementen besteht, die sich im Randbereich überlappen, so daß dadurch der Wirkungsgrad erhöht wird.

Durch die erfindungsgemäße Anordnung wird außerdem durch die bewirkte Kühlung der Solarzelle deren Wirkungsgrad ebenfalls erhöht und die durch die Solarzelle erzeugte elektrische Energie wird in das Netz eingespeist.

Das fotovolaische Modul besteht aus einer Glasplatte mit aufgebauten mono- multikristallinischen Sonnenzellen.

Die Gesamtanordnung ist in einem Gehäuse untergebracht, wobei die Rohrführungen in diesem Gehäuse natürlich in einer entsprechenden Isolierung liegen. Die Solarzellen, welche auf einer Glasplatte zu einem kompletten Modul zusammengebaut und gekoppelt sind, absorbieren die Sonnenstrahlung und setzen diese in elektrische Energie und Wärme um. Die Absorberplatte, welche an der Hinterseite des fotovoltaischen Moduls befestigt ist, absorbiert die thermische Energie und gibt diese weiter an ein Absorberrohr und ein Kollektorrohr.

Anlagen, die nicht mit dem öffentlichen Elektrizitätsnetz verbunden sind, in welches das fotovoltaische Modul seine Energie abgibt, können die erzeugte elektrische Energie natürlich auch für andere Zwecke, z. B. elektrolytische Wasserstoffproduktion, benutzen.

Die gewonnene Energie des thermischen Moduls, d. h. also die Wärme des Moduls, wird mittels eines Wärmetauschers und Pumpen in einem Boiler gelagert oder ohne Zwischenschaltung eines Wärmetauschers in den Boden eingeführt, woraus die gelagerte Wärme je nach Bedarf entnommen werden kann evtl. mit einer Wärmepumpe. Die neuerungsgemäße Hybridanordnung kann für Krankenhäuser, Pflegeheime, Schwimmbad, Badeeinrichtungen und Sporthallen und Hotels, Großkücheneinrichtungen usw. eingesetzt werden.

Das erfindungsgemäße System ist für einen Einbau im Dach, auf dem Dach, einer Feldaufstellung geeignet und ist in an sich bekannter Weise nach Süden ausgerichtet.

Ein Ausführungsbeispiel der Erfindung wird nachfolgend anhand der Zeichnungen erläutert. Die Zeichnungen zeigen in
- Fig. 1: in größerem Maßstab einen Teilausschnitt aus einer Hybridanordnung und in
- Fig. 2: einen Schaltplan zur Gewinnung der Energie aus der neuerungsgemäßen Hybrideinrichtung.

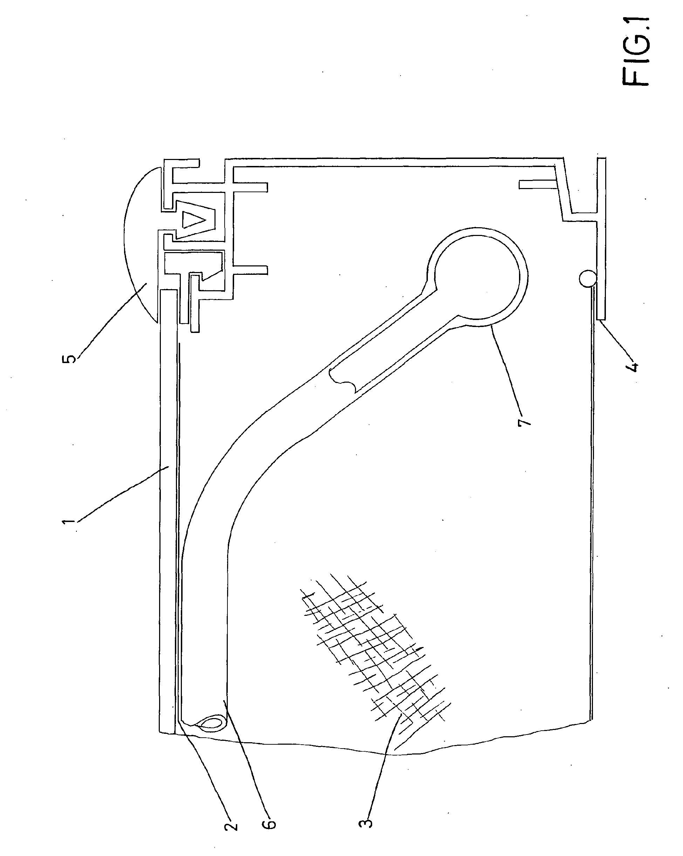

In Fig. 1 ist mit 1 das fotovoltaische Modul bezeichnet und mit 2 eine unter diesem Modul 1 angeordnete Absorberplatte, die vorzugsweise aus Kupfer besteht. Vorzugsweise besteht diese Absorberplatte 2 aus einzelnen Plattenelementen, die sich sogar im Randbereich überlappen, so daß dadurch die Leistungsfähigkeit erhöht wird.

An die Absorberplatte 2 schließt ein Absorberrohr 6 an, das von einer Flüssigkeit, vorzugsweise Wasser, durchströmt wird, wobei dieses Absorberrohr 6 sein warmes Wasser an eine Sammelleitung 7 abgibt, die zu den einzelnen Verbrauchern ggf. unter Zwischenschaltung von Wärmetauschern führt.

Die Gesamtanordnung befindet sich in einem Gehäuse 4, wobei das eigentliche fotovoltaische Modul 1 von einer Dichtung 5 festgelegt wird. Innerhalb dieses Gehäuses 4 sind diese Gesamtanordnungen in einer Isolation 3 angeordnet.

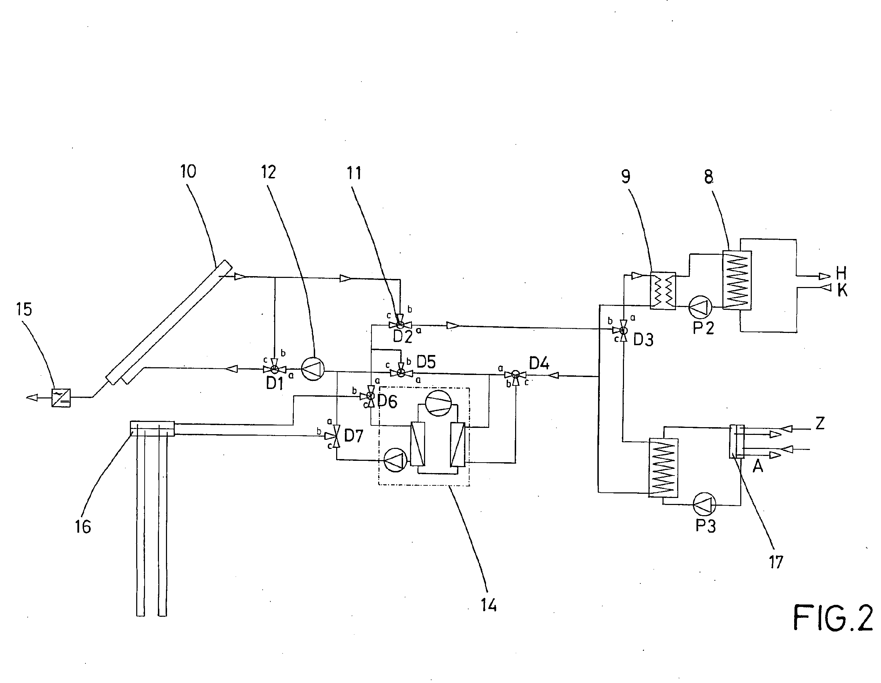

In Fig. 2 ist eine Schaltungsanordnung dargestellt, bei der mit 8 ein Warmwasserboiler, mit 9 ein vorgeschalteter Wärmetauscher bezeichnet ist. Mit 10 ist der Hybridkollektor bezeichnet und mit 11 ein Dreiwegehahn, wobei mehrere solcher Dreiwegehähne vorgesehen sind, die mit D1 - D7 bezeichnet sind. Auch sind eine Vielzahl von Pumpen eingeschaltet, die in Fig. 2 mit P1, P2 und P3 bezeichnet sind.

Bei 14 ist eine Wärmepumpe dargestellt und bei 15 der Zugang vom fotovoltaischen Element zum Netz.

16 bezeichnet eine Erdsondenanlage, die zu einem Erdspeicher führt bzw. einen Erdspeicher schafft und bei 17 ist ein Heizungsverteiler angedeutet. Aus dieser Darstellung ist ersichtlich, daß sowohl ein Warmwasserspeicher 8 als auch eine Heizungsanordnung 17 als auch ein Erdspeicher 16 mit der neuerungsgemäßen Anordnung entweder gleichzeitig oder nacheinander betrieben werden kann.

Als Beispiel für den Betrieb der erfindungsgemäßen Anlage wird nachfolgend ein Schaltungsschema erläutert, wonach Wärme zum Heißwasserboiler 8, Wärme zur Heizung 17, Wärme zum Erdspeicher 16 geführt wird und Wärme aus dem Erdspeicher einer Wärmepumpe gewonnen werden kann.

| Prozess Verlauf | | | | | |
|---|---|---|---|---|---|
| | warme nach Heisswasser Steuerungsprogramm 1 | Warme nach Heizung Steuerungsprogramm 2 | Warme nach Erd Speicher Steuerungsprogramm 3 | Warme aus Erd Speicher Steuerungsprogramm 4 | Warme aus Erd Speicher und Warmepump Steuerungsprogramm 5 |
| Pump 1 | ein | ein | ein | ein | ein |
| Pump 2 | ein | aus | aus | ein | ein |
| Pump 3 | aus | ein | aus | aus | aus |
| Hahn 1 | ac | ac | ac | ab | ab |
| Hahn 2 | ba | ba | bc | ba | ba |
| Hahn 3 | ba | bc | 0 | ba | ac |
| Hahn 4 | ac | ac | 0 | ac | bc |
| Hahn 5 | ac | ac | 0 | ab | ac |
| Hahn 6 | 0 | 0 | ab | ab | bc |
| Hahn 7 | 0 | 0 | ab | ab | bc |
| Warmepump | aus | aus | aus | aus | ein |

## Patentansprüche

1. Kombination von Solarzellen zur fotovoltaischen Stromerzeugung mit Sonnenkollektoren zur Erzeugung von Wärmeenergie in einem Hybridkollektor, **gekennzeichnet durch** ein an der Rückseite der Solarzellen (1) angeordnetes Absorberelement (2), wobei die Energie des Absorberelementes (2) ggf. über einen Wärmetauscher einem Speicherelement (8, 16, 17) aufgegeben wird.

2. Anordnung nach Anspruch 1, **dadurch gekennzeichnet, dass** das Absorberelement (2) seine Wärme über flüssigkeitsführende Absorberrohre (6) an eine Sammelleitung (7) abgibt, die zu den Wärmetauschern führt.

3. Anordnung nach Anspruch 1 oder 2, **gekennzeichnet durch** eine Vielzahl von einzelnen Absorberelementen (2) und Absorberrohre (6) an der Rückseite der Solarzellen (1).

4. Anordnung nach einem oder mehreren der vorhergehenden Ansprüche, **gekennzeichnet durch** einen Warmwasserboiler (8) als Speicherelement.

5. Anordnung nach einem oder mehreren der vorhergehenden Ansprüche 1 - 3, **dadurch gekennzeichnet, dass** der Warmwasserboiler in einem Heizungskreis (17) integriert ist.

6. Anordnung nach einem oder mehreren der vorhergehenden Ansprüche 1 - 3, **gekennzeichnet durch** eine geothermische Lagerung als Speicherelement (16).

7. Anordnung nach einem oder mehreren der vorhergehenden Ansprüche, **dadurch gekennzeichnet, daß** das Absorberelement (2) aus Kupfer besteht.

8. Anordnung nach einem oder mehreren der vorhergehenden Ansprüche, **dadurch gekennzeichnet, daß** das Absorberelement (2) aus einer Vielzahl von einzelnen Kupferplatten besteht, die sich im Randbereich überlappen.
